# FASCICULE DE BREVET EUROPEEN

(11) **EP 1 120 321 B1**
(45) Date de publication et mention de la délivrance du brevet: **23.08.2006**
(21) Numéro de dépôt: 01400076.4
(22) Date de dépôt: 12.01.2001
(51) Int. Cl.: B60S 1/48

(54) **Dispositif de lavage de surfaces vitrées pour véhicule automobile**
Fahrzeugswindschutzscheibenreinigungsgerät
Device for cleaning windscreen on automobile

(30) Priorité: 28.01.2000 FR 0001144
(43) Date de publication de la demande: 01.08.2001
(73) Titulaire: Renault s.a.s., 92100 Boulogne Billancourt (FR)
(72) Inventeur: Guillaumin, Jean-Pierre, 92150 Suresnes (FR)

(56) Documents cités:
- EP-A- 0 924 435
- DE-A- 4 139 584
- FR-A- 2 703 409
- US-A- 4 679 983
- US-A- 4 728 260
- US-A- 4 900 235

## Description

La présente invention est relative à un dispositif de lavage de surfaces vitrées pour véhicule automobile, comme le lave-vitre de pare-brise et le lave-projecteurs.

Plus particulièrement, l'invention concerne un tel dispositif de lavage comprenant au moins deux gicleurs.

Les lave-vitres et les lave-projecteurs connus, habituellement utilisés pour les véhicules automobiles, comportent une pompe commune à deux sorties qui peut être commandée par un interrupteur placé en général sous le volant. Lors du fonctionnement, cette pompe alimente simultanément le lave-vitre et le lave-projecteurs, ce dernier desservant simultanément les deux blocs optiques d'éclairage avant du véhicule.

Cette solution présente l'avantage d'un faible coût, car la pompé unique peut être de type standard, fabriqué en de très grandes séries. Cependant, lorsque le givrage du liquide de lavage devient trop important, par exemple pour des températures inférieures à -12°C, la pompe ne pourra plus fournir qu'une faible pression à la sortie des gicleurs, réduisant ainsi l'efficacité du nettoyage des surfaces concernées. En effet, une trop forte baisse de la pression conduit à une diminution de la puissance du jet et, partant, à une modification de la trajectoire du liquidé de lavage à la sortie du gicleur.

Un véhicule comportant un dispositif de lavage des projecteurs comprenant les caractéristiques du préambule de la revendication 1 est connu du document DE-A-4 139 584.

Les documents US-A-4679983, US-A-4728260, US-A-4900235 et EP-A-0924435 décrivent des dispositifs de lavage permettant de nettoyer le pare-brise et la lunette arrière d'un véhicule. Cependant, dans ces cas-là, le but visé est essentiellement de proposer un réservoir commun pour le nettoyage des deux surfaces vitrées. De plus, les contraintes liées aux nettoyage de ce type de surface vitrées sont différentes de celles liées au lavage de projecteur. Par conséquent, de tels dispositifs ne sont pas transposable au lavage de projecteurs.

Pour remédier à cet inconvénient, il a déjà été proposé d'utiliser des pompes d'alimentation séparées pour le lave-glace et les lave-projecteurs, celle dédiée à l'alimentation du lave-projecteurs ayant une puissance plus importante que l'autre pompe. De la sorte, la température en deçà de laquelle le givrage du liquide devient gênant est abaissée. Cependant, cette solution est relativement coûteuse, car il faut deux pompes dont l'une n'est pas de type standard. En outre, la pompe de plus grande puissance a une consommation en liquide de lavage plus importante de sorte qu'il convient, pour éviter une fréquence de remplissage trop importante, de prévoir un réservoir de liquide plus encombrant alourdissant le véhicule par son contentant.

Une autre proposition de la technique antérieure est décrite dans EP-A-0 924 435. Dans ce cas, on utilise une seule pompe d'alimentation bidirectionnelle, comprenant deux sorties par lesquelles le liquide peut être envoyé sélectivement vers le lave-vitre ou vers le lave-projecteurs à travers un clapet de sélection. Celui-ci étant sollicité par la pression en fonction du sens de rotation de la pompe, il peut obturer l'une ou l'autre sortie. Le sens de rotation de la pompe est commandé par l'intermédiaire d'un inverseur accessible au conducteur du véhicule. Bien que cette solution nécessite aussi une pompe d'un type particulier, elle présente l'avantagé de résoudre dans une mesure adéquate les problèmes de givrage du liquide dus aux basses températures, car la pression assurée par la pompe est disponible en totalité pour chaque type de nettoyage. Toutefois, dans ce cas, les dispositifs de lavage ne peuvent fonctionner en même temps et le conducteur doit prendre une décision quant au dispositif de lavage qu'il convient de faire fonctionner.

L'invention a pour but de fournir un dispositif due lavage permettant d'assurer un nettoyage approprié des surfaces vitrées même à basse température.

Elle a donc pour objet un dispositif de lavage de surfaces vitrées de projecteurs pour véhicule automobile, comprenant au moins deux gicleurs, du type dans lequel une pompe rotative réversible à deux sorties est capable de refouler sélectivement du liquide de lavage vers lesdits gicleurs selon que la pompe tourne dans un sens ou dans l'autre, les sorties de ladite pompe étant connectés chacune à l'un desdits gicleurs, caractérisé en ce que le dispositif comprend également des moyens de commande pour, pendant un cycle de lavage de ladite ou desdites surfaces vitrées, commander alternativement la pompe dans un sens ou dans l'autre avec une demi-période prédéterminée, ledit cycle de lavage comprenant une pluralité de périodes.

Grâce à ces caractéristiques, la pression de la pompe de liquide de lavage est disponible en totalité chaque fois qu'elle est appliquée individuellement à un gicleur. De ce fait, on abaisse le seuil pour lequel le gel peut poser des problèmes pour l'efficacité de l'arrosage de la surface vitrée, le dispositif de lavage pouvant ainsi être utilisé à des températures comparativement plus basses. On peut également utiliser une pompe de puissance plus faible, car en toutes circonstances elle ne débitera que dans un seul gicleur à la fois.

L'alimentation alternée des gicleurs en liquide de lavage n'altère pas l'efficacité de l'arrosage, puisque la période d'activité de chaque gicleur peut être répétée à une fréquence relativement élevée, et peut elle-même être de courte durée. La consommation en liquide de lavage zu n'est donc pas augmentée par rapport à celle des dispositifs de lavage antérieurs.

Suivant des modes de réalisation avantageux de l'invention:
- lesdits moyens de commande sont agencés pour court-circuiter ladite pompe à chaque inversion de sens de rotation;
- lesdits moyens de commande comprennent un montage de va-et-vient dont les contacts inverseurs sont associés à un montage de commande alternée;
- les contacts inverseurs dudit montage de va-et-vient comprennent des bobines d'actionnement connectées audit montage de commande alternée pour être excitées en alternance lorsque le dispositif de lavage est en service.
- ledit montage de commande alternée comporte un contact inverseur capable d'exciter lesdites bobinées sélectivement dans l'une ou l'autre de ses positions et ledit contact inverseur est lui-même commandé par une bobine alimentée par un générateur d'impulsions;
- la durée de ladite demi-période est sensiblement égale à 300 millisecondes.

L'invention a également pour objet un lave-vitre de pare-brise comprenant un dispositif de lavage tel que défini ci-dessus, lesdits gicleurs étant placés de manière à pouvoir asperger chacun une zone prédéterminée du pare-brise de ce véhicule.

L'invention a encore pour objet un lave-projecteurs comprenant un dispositif de lavage tel que défini ci-dessus, lesdits gicleurs étant placés respectivement de manière à pouvoir asperger chacun l'un des projecteurs zu d'un véhicule.

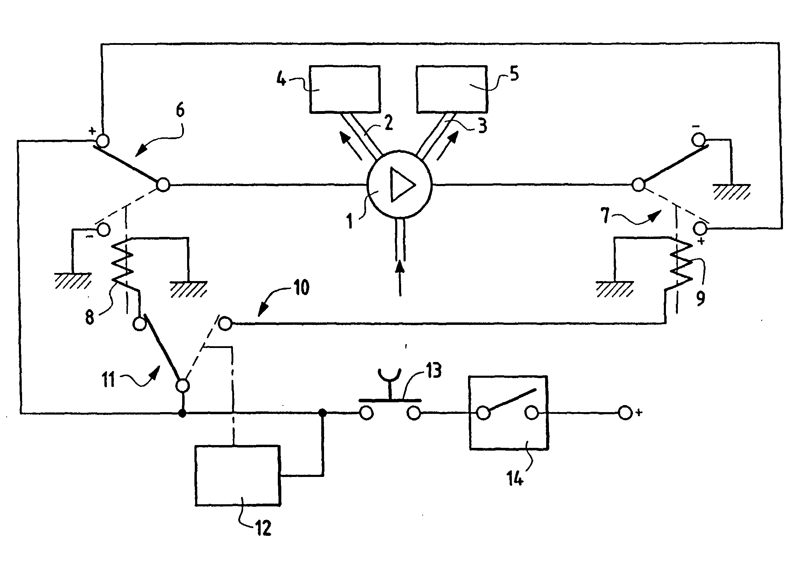

D'autres caractéristiques et avantages de l'invention ressortiront de la description qui va suivre, donnée uniquement à titre d'exemple et faite en se référant au dessin annexé sur lequel la figure unique représente un schéma électrique d'un dispositif de lavage selon l'invention.

Conformément au mode de réalisation selon l'invention représenté à titre d'exemple sur la figure unique, le dispositif de lavage comprend une pompe réversible 1 de liquide de lavage, par exemple, de l'eau avec un antigel, cette pompe comprenant deux sorties 2 et 3 connectées, respectivement par des tuyauteries appropriées, à des gicleurs de lave-projecteurs 4 et 5. La pompe 1 peut être celle décrite dans la demande de brevet européen précitée. Chaque sortie 2, 3 de la pompe peut dont sélectivement refouler du liquide de nettoyage selon que la pompe tourne dans un sens ou dans l'autre.

L'induit du moteur électrique d'entraînement (non représenté) de la pompe 1 est connecté dans un circuit de va-et-vient comprenant deux contacts inverseurs 6 et 7 associés respectivement à des bobines de commande 8 et 9.

Ces bobines 8 et 9 peuvent être excitées sélectivement par un montage d'alimentation alternée 10. Dans le mode de réalisation représenté, ce dernier comprend un contact inverseur 11 commandé par un générateur d'impulsions 12. Ce dernier peut être par exemple un circuit basculeur tel qu'un flip-flop pour opérer l'inversion du contact inverseur 11 avec une période prédéterminée. Ainsi, chaque position du contact inverseur 11 peut être maintenue pendant une demi-période de 300 millisecondes par exemple. Des montages de ce type sont bien connus des spécialistes et ne nécessitent donc pas une description détailléé.

Il est à noter que du fait des temps de réaction des contacts inverseurs 6 et 7, le montage de va-et-vient permet par inhérence d'assurer un bref court-circuit de l'induit du moteur d'entraînement de la pompe 1, lors de l'inversion de son sens de rotation, ce qui permet d'en provoquer un arrêt brusque avant qu'elle n'amorce le mouvement de rotation dans le sens opposé. Le temps de réaction des inverseurs 6 et 7 peut éventuellement délibérément être augmenté soit mécaniquement, soit électriquement selon des méthodes qui sont bien connues des spécialistes. La mise en court-circuit de l'induit du moteur d'entraînement de la pompe 1 permet de pallier les problèmes d'inertie survenant lors de l'inversion du sens de rotation.

Le dispositif de lavage comprend également un interrupteur de commande 13 placé à portée du conducteur du véhicule et, s'il est dédié au lavage des projecteurs, cet interrupteur de commande est connecté en série avec un interrupteur d'autorisation faisant partie de la commande de projecteurs 14 du véhicule. La tension de bord peut ainsi être appliquée au dispositif de lavage, soit par la fermeture du seul interrupteur 13, lorsque le dispositif est affecté au lavage d'un pare-brise, soit par la fermeture simultanée dé l'interrupteur 13 et celui de la commandé de projecteurs 14, lorsqu'il s'agit d'un dispositif de lave-projecteurs.

Les avantages de l'invention apparaissent clairement d'après la description qui précède. Les deux gicleurs du dispositif de lavage étant alimentés en alternance avec une demi-période relativement courte, toute la pression de la pompe réversible est disponible pour le gicleur qui, à un moment considéré, est en service. Le seuil pour lequel le gel du liquide de lavage devient gênant est ainsi abaissé par rapport à ceux des dispositifs de lavage de la technique antérieure. Certes, bien que la puissance de la pompe puisse être déterminée en fonction de l'alimentation d'un seul gicleur à la fois, le dispositif de lavage selon l' invention nécessite une pompe réversible d'un coût plus élevé que les pompes classiques non réversibles de la technique antérieure. Cependant, si l'on envisage d'équiper un grand nombre de véhicules avec des dispositifs de lavage du type de l'invention en en prévoyant par exemple un pour le lave-vitre de pare-brise et un autre pour le lave-projecteurs, le prix de revient des pompes pourra être abaissée la solution de l'invention devenant alors attractive du fait de la réduction des problèmes de givrage du liquide de lavage.

L'invention n'est pas limitée au mode de réalisation décrit et représenté. En particulier, les contacts inverseurs et leurs bobines de commande associées peuvent être remplacés par des organes de commutation à semiconducteurs selon des techniques qui sont à la portée de l'homme de métier.

De même, l'application du dispositif de lavage selon l'invention n'est limitée ni aux pare-brise, ni aux projecteurs d'un véhicule. Par exemple, en dotant un dispositif de lavage de lunette arrière de deux gicleurs, les avantages de sensibilité réduite aux basses températures et de réduction de puissance peuvent être étendus à une telle application.

## Revendications

1. Dispositif de lavage de surfaces vitrées de projecteurs pour véhicule automobile, comprenant au moins deux gicleurs (4, 5), du type dans lequel une pompe rotative réversible (1) à deux sorties (2, 3) est capable de refouler sélectivement du liquide de lavage vers lesdits gicleurs selon que la pompe tourne dans un sens ou dans l'autre, les sorties (2, 3) de ladite pompe étant connectées chacune à l'un desdits gicleurs (4, 5), **caractérisé en ce que** le dispositif comprend également des moyens de commande (6 à 14) pour, pendant un cycle de lavage de ladite ou desdites surfaces vitrées, commander alternativement la pompe (1) dans un sens ou dans l'autre avec une demi-période prédéterminée, ledit cycle de lavage comprenant une pluralité de périodes.

2. Dispositif de lavage suivant la revendication 1, **caractérisé en ce que** lesdits moyens de commande (6 à 14) sont agencés pour court-circuiter ladite pompe (1) à chaque inversion de sens de rotation.

3. Dispositif de lavage suivant l'une quelconque des revendications 1 et 2, **caractérisé en ce que** lesdits moyens de commande comprennent un montage de va-et-vient 25 (6 à 9) dont les contacts inverseurs (6, 7) sont associés à un montage de commande alternée (10, 11, 12).

4. Dispositif suivant la revendication 3, **caractérisé en ce que** les contacts inverseurs (6, 7) dudit montage de va-et-vient comprennent des bobines d'actionnement (8, 9) connectées audit montage de commande alternée (10, 11, 12) pour être excitées en alternance lorsque le dispositif de lavage est en service.

5. Dispositif de commande suivant la revendication 4, **caractérisé en ce que** ledit montage de commande alternée comporte un contact inverseur (11) capable d'exciter lesdites bobines (8, 9) sélectivement dans l'une ou l'autre de ses positions et **en ce que** ledit contact inverseur (11) est lui-même commandé par une bobine alimentée par un générateur d'impulsions (12).

6. Dispositif de lavage suivant l'une quelconque des revendications précédentes, **caractérisée en ce que** la durée de ladite demi-période est sensiblement égale à 300 millisecondes.

7. Lave-vitre de pare-brise comprenant un dispositif de lavage suivant l'une quelconque des revendications précédentes, lesdits gicleurs (4, 5) étant placés de manière à pouvoir asperger chacun une zone prédéterminée dudit pare-brise.

8. Lave-projecteurs comprenant un dispositif de lavage suivant l'une quelconque -des revendications 1 à 6, lesdits gicleurs (4, 5) étant placés respectivement de manière à pouvoir asperger chacun l'un des projecteurs.

## Claims

1. Device for cleaning glazed surfaces of headlamps for an automobile, comprising at least two nozzles (4, 5), of the type in which a reversible rotary pump (1) with two outlets (2, 3) is capable of delivering cleaning fluid selectively to the said nozzles depending on whether the pump is rotating in one direction or in the other, each of the outlets (2, 3) of the said pump being connected to one of the said nozzles (4, 5), which device is **characterized in that** it also includes control means (6 to 14) for operating the pump (1) alternately, during a cycle of cleaning the said glazed surface or surfaces, in one direction or the other with a predetermined half-period, the said cleaning cycle comprising a plurality of periods.

2. Cleaning device according to Claim 1, **characterized in that** the said control means (6 to 14) are constructed so as to shortcircuit the said pump (1) every time the direction of rotation is inverted.

3. Cleaning device according to either of Claims 1 and 2, **characterized in that** the said control means comprise a reciprocating set-up (6 to 9) in which the change-over contacts (6, 7) are connected to an alternating-operation set-up (10, 11, 12).

4. Device according to Claim 3, **characterized in that** the change-over contacts (6, 7) of the said reciprocating set-up comprise actuating coils (8, 9) connected to the said alternating-operation set-up (10, 11, 12) in order to be energized alternately when the cleaning device is in service.

5. Operating device according to Claim 4, **characterized in that** the said alternating-operation set-up comprises a change-over contact (11) capable of energizing the said coils (8, 9) selectively in either of its positions and **in that** the said change-over contact (11) is itself controlled by a coil supplied by a pulse generator (12).

6. Cleaning device according to any one of the preceding claims, **characterized in that** the duration of the said half-period is approximately equal to 300 milliseconds.

7. Windscreen washer comprising a cleaning device according to any one of the preceding claims, the said nozzles (4, 5) being positioned where they can each spray a predetermined area of the said windscreen.

8. Headlamp washers comprising a cleaning device according to any one of Claims 1 to 6, each of the said nozzles (4, 5) being positioned where it can spray a respective one of the headlamps.

## Patentansprüche

1. Vorrichtung zum Waschen verglaster Oberflächen von Scheinwerfern für Kraftfahrzeug, die mindestens zwei Spritzer (4, 5) aufweist, des Typs, bei dem eine umkehrbare Drehpumpe (1) mit zwei Ausgängen (2, 3) selektiv Waschflüssigkeit zu den Spritzern fördern kann, je nachdem, ob die Pumpe in die eine Richtung oder in die andere dreht, wobei die Ausgänge (2, 3) der Pumpe jeweils an einen der Spritzer (4, 5) angeschlossen sind, **dadurch gekennzeichnet, dass** die Vorrichtung ferner Steuermittel (6 bis 14) aufweist, um während eines Waschzyklus der einen oder mehreren verglasten Oberflächen die Pumpe (1) alternativ mit einer vorausbestimmten Halbperiode in die eine Richtung oder in die andere zu steuern, wobei der Waschzyklus eine Vielzahl von Perioden aufweist.

2. Waschvorrichtung nach Anspruch 1, **dadurch gekennzeichnet, dass** die Steuermittel (6 bis 14) eingerichtet sind, um die Pumpe (1) bei jedem Umkehren der Drehrichtung kurzzuschließen.

3. Waschvorrichtung nach einem der Ansprüche 1 und 2, **dadurch gekennzeichnet, dass** die Steuermittel eine Hin-und-Her-Montage (6 bis 9) aufweisen, deren Umkehrkontakte (6, 7) zu einem Aufbau für abwechselndes Steuern (10, 11, 12) gehören.

4. Vorrichtung nach Anspruch 3, **dadurch gekennzeichnet, dass** die Umkehrkontakte (6, 7) des Hin-und-Her-Aufbaus Betätigungsspulen (8, 9) aufweisen, die an den Aufbau zum abwechselnden Steuern (10, 11, 12) angeschlossen sind, um abwechselnd erregt zu werden, wenn die Waschvorrichtung in Betrieb ist.

5. Steuervorrichtung nach Anspruch 4, **dadurch gekennzeichnet, dass** der Aufbau zum abwechselnden Steuern einen Umkehrkontakt (11) aufweist, der die Spulen (8, 9) selektiv in der einen oder der anderen seiner Positionen erregen kann, und dass der Umkehrkontakt (11) selbst von einer Spule gesteuert wird, die von einem Impulsgenerator (12) versorgt wird.

6. Waschvorrichtung nach einem der vorhergehenden Ansprüche, **dadurch gekennzeichnet, dass** die Dauer der Halbperiode im Wesentlichen gleich 300 Millisekunden ist.

7. Windschutzscheibenwaschanlage, die eine Waschvorrichtung gemäß einem der vorhergehenden Ansprüche aufweist, wobei die Spritzer (4, 5) so angeordnet sind, dass sie jeweils eine vorausbestimmte Zone der Windschutzscheibe besprühen können.

8. Scheinwerferwaschanlage, die eine Waschvorrichtung nach einem der Ansprüche 1 bis 6 aufweist, wobei die Spritzer (4, 5) jeweils so angeordnet sind, dass sie jeder einen der Scheinwerfer besprühen können.
